# EUROPÄISCHE PATENTANMELDUNG

(11) **EP 0 780 950 A2**
(43) Veröffentlichungstag der Anmeldung: **25.06.1997**
(21) Anmeldenummer: 96111967.4
(22) Anmeldetag: 25.07.1996
(51) Int. Cl.: H02H 7/12

(54) **Verfahren zum Schutz eines Schaltreglers sowie Anordnung und Anwendung**

(30) Priorität: 23.12.1995 DE 19548724
(71) Anmelder: ROBERT BOSCH GMBH, 70442 Stuttgart (DE)
(72) Erfinder: Ohms, Franz, Dipl.-Ing., 74420 Oberrot (DE)

(57) **Zusammenfassung**

Zum Schutz eines Schaltreglers gegen fehlerhafte Betriebszustände wird das Regelsignal daraufhin überwacht, ob es länger als eine vorgegebene Zeitspanne auf einem logischen Pegel (H, L) verweilt. In diesem Falle wird vorzugsweise über ein Schaltwerk (MF) ein Schutzsignal (Q) generiert, um den Schaltregler außer Betrieb zu setzen.

Es können vielfältige Fehlerfälle mit einem einfachen Schaltwerk (MF) ausgewertet werden.

## Beschreibung

### Stand der Technik

Die Erfindung geht aus von einem Verfahren zum Schutz eines Schaltreglers gegen fehlerhafte Betriebszustände gemäß dem Oberbegriff des Patentanspruchs 1 oder von einer entsprechenden Anordnung.

Bei Schaltreglern erfolgt die Regelung normalerweise durch eine Steuerung des Tastverhältnisses bei den Schaltpulsen für das Schaltregler-Stellglied. Damit kann der Schaltregler jedoch nicht gegen fehlerhafte Betriebszustände wie Dauerkurzschluß bei der Last, Unterbrechung in der Regelschleife oder Kurzschluß des Stellgliedes geschützt werden, da in diesen Fällen das Schaltregler-Stellglied immer voll leitend gesteuert ist oder nur mit sehr kurzen Pulsen angesteuert wird.

Um fehlerhafte Betriebszustände zu erfassen, weisen herkömmliche Steuerbausteine für Schaltregler-Stellglieder, z. B. der TDA 1060 oder der TDA 4700 (Otto Macek, Schaltnetzteile-Motorsteuerungen und ihre speziellen Bauteile, Dr. Alfred Hüthig-Verlag, Heidelberg, 1982, Seite 114-125, insbesondere Bild 2.66), zusätzliche Komperatoren für Überspannung, Unterspannung oder Überstrom auf.

### Vorteile der Erfindung:

Mit den Maßnahmen gemäß Anspruch 1, bzw. Anspruch 3, können fehlerhafte Betriebszustände - wie Überspannung, Unterspannung, Überstrom - einfach detektiert werden. Der Schaltregler kann dann außer Betrieb gesetzt werden, um Zerstörungen, insbesondere an seinem Stellglied, an der Versorgungsquelle oder an der Last zu verhindern.

Im Gegensatz zum Stand der Technik, wo für jeden Fehlerfall ein separater Komparator notwendig ist, benötigt die Erfindung keinen solchen Komparator, der Drifterscheinungen unterworfen sein kann und daher zu einem ungenauen Ansprechen der Schutzfunktion führt. Außerdem benötigt ein solcher Komparator immer ein Referenzsignal, das ebenfalls ausfallen oder gestört sein kann, was die Verfügbarkeit der Schutzfunktion vermindert. Anstelle von U. U. mehreren Komparatoren ist bei der Erfindung nur ein einfaches Schaltwerk erforderlich, das alle zuvor genannten Fehlerfälle gleichzeitig und sicher detektiert und ein zuverlässiges Schutzsignal liefert. Dieses Schaltwerk benötigt keine Referenzsignale und arbeitet somit zuverlässiger. Drifterscheinungen spielen bel der Aufbereitung des Schutzsignals kaum eine Rolle.

Die Erfindung geht von der Erkenntnis aus, daß sich das Regelsignal eines Schaltreglers pro Taktzyklus mindestens einmal von H (High) auf L (Low) - Potential ändert. Bel einer zu geringen Eingangsspannung bleibt das Regelsignal auf H-Potential. Bei einer Regelkreisunterbrechung bleibt das Regelsignal ebenfalls auf H-Potential. Da bei diesem Betriebsfall die Ausgangsspannung ansteigt, kann auch dieser Fall detektiert werden. Bei einem Kurzschluß des Schaltregler-Stellglied-Transistors steigt die Ausgangspannung an und der Schaltregler würde bei korrekter Regelschleife dauernd ein Schaltsignal mit L-Potential für den Stellglied-Transistor liefern.

Durch die Überwachung des Regelsignales daraufhin, ob es länger als eine vorgegebene Zeitspanne auf einem logischen Pegel (H- oder L-Potential) verweilt, kann ein Schutzsignal generiert werden, das den Schaltregler außer Betrieb setzt. Als Auswerteschaltung eignet sich ein einfaches, retriggerbares Mono-Flop, das auf Schaltflanken anspricht.

### Zeichnungen

Anhand der Zeichnungen wird ein Ausführungsbeispiel der Erfindung näher erläutert. Es zeigen
Figur 1 ein Blockschaltbild eines Schaltreglers mit einer erfindungsgemäßen Schutzschaltung,
Figur 2 die zeitlichen Verläufe eines Taktsignales und eines Regelsignales,
Figur 3 Zeitdiagramme ausgewählter Signale.

### Beschreibung der Erfindung

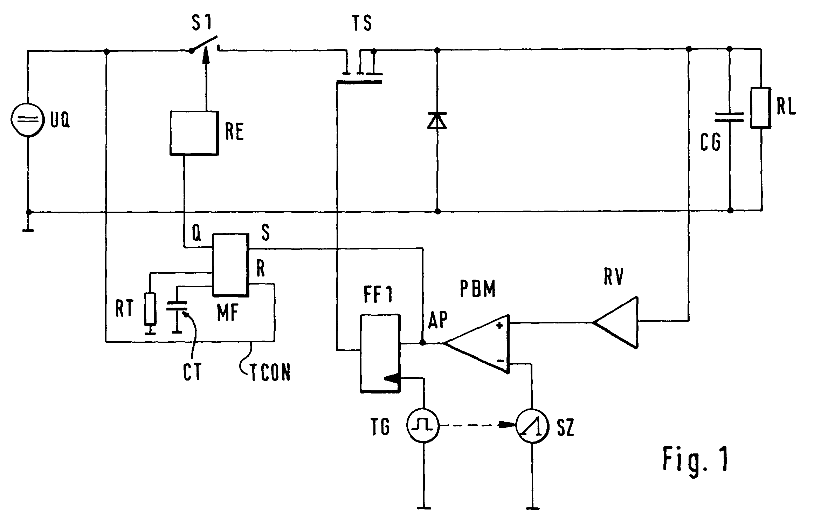

Figur 1 zeigt einen üblichen Schaltregler in Form eines Buckreglers (Abwärtsstellers) mit einem Schaltregler-Stellglied TS, einer Freilaufdiode DF, einer Speicherdrossel DL und einem ausgangsseitigen Glättungskondensator CG. Der Eingang des Schaltreglers ist über einen Schalter S 1 zur Inbetriebnahme mit einer Versorgungsquelle UQ verbunden. Die Ausgangsklemmen des Schaltreglers sind mit einem Verbraucher RL geschaltet.

Der Regelkreis des Schaltreglers besteht aus einem üblichen Regelverstärker RV für die Fehlergröße - Abweichung der Ausgangsspannung UA von einem Sollwert -, einem Pulsbreitenmodulator PBM, dessen Referenzeingang mit einem Sägezahnsignal SZ beaufschlagt ist und ggf. zusätzlichen Referenzsignalen zur Abgabe einer konstanten Ausgangsgleichsspannung. Besonders vorteilhaft ist es, für die weiteren Referenzsignale jene Signale zu wählen, die dem Sägezahnsignal gemäß der EP 0 355 333 B1 zusätzlich überlagert werden. Zwischen dem Ausgang des Pulsbreitenmodulators PBM und dem Steuereingang des Stellgliedes TS ist ein D-Flip-Flop FF 1 vorgesehen, welches von einem Taktgenerator TG gesteuert ist und die Einschalt- bzw. Abschaltzeiten des Stellgliedes festlegt. Das vom Taktgenerator TG abgegebene Taktsignal dient als Triggersignal für das D-Flip-Flop FF 1. Über den Taktgenerator TG kann auch das Sägezahnsignal bezüglich seiner Periodendauer gesteuert werden.

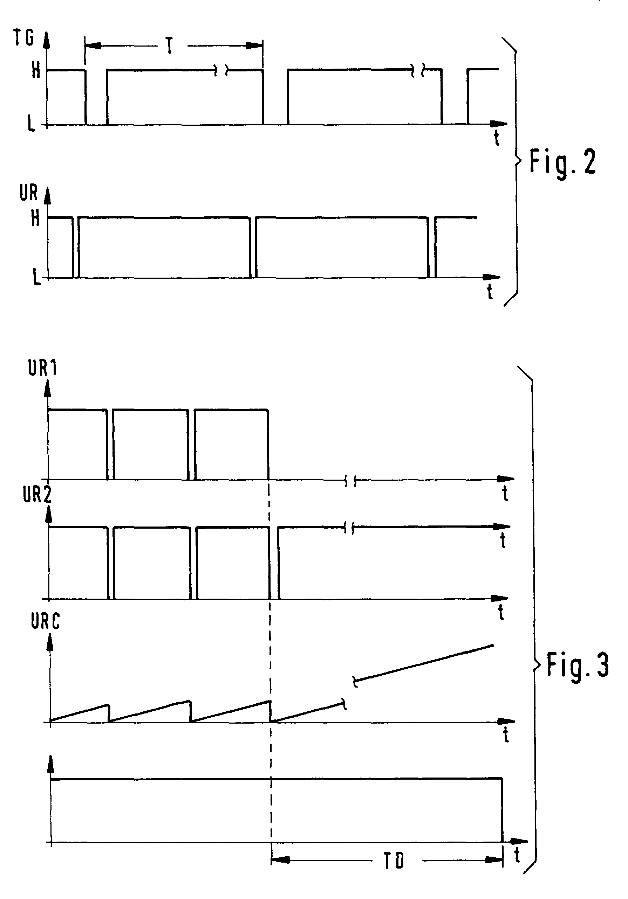

Figur 2 zeigt den Verlauf des Taktsignales des Taktgenerators TG mit der Periodendauer T und darunter das Regelsignal UR. Im Normalbetrieb ändert sich das Regelsignal UR mindestens einmal vom logischen H-Pegel auf den logischen L-Pegel. An der Regelgrenze, z. B. bei zu geringer Eingangsspannung, bleibt das Regelsignal UR auf H-Potential, d. h., das Stellglied erhält dauernd ein Steuersignal zum Einschalten. Auf Grund dieses Sachverhaltes kann eine Eingangsunterspannung detektiert werden. Bei einer Regelkreisunterbrechung wird ebenfalls ein Steuersignal für den Einschaltzustand des Stellgliedes abgegeben. Da bei diesem Betriebsfall die Ausgangsspannung UA ansteigt, liegt der Fall der Schaltreglerüberspannung - Buck-Überspannung - vor. Dieser fehlerhafte Betriebszustand kann demnach ebenfalls detektiert werden.

Ein weiterer Fehlerfall liegt vor, werin der Stellglied-Transistor TS einen Kurzschluß aufweist. Bei diesem Betriebsfall steigt die Ausgangsspannung UA an und der Regler liefert für das Stellglied bei korrekter Regelschleife dauernd einen Ausschaltbefehl.

In nachfolgender Tabelle ist dargestellt, wie durch Auswertung eines Regelsignales, z. B. der Regelspannung UA, am Abgriff AP zwischen dem Ausgang des Pulsbreitenmodulators PBM und dem D-Flip-Flop FF 1, fehlerhafte Betriebszustände erkannt werden.

| **Betriebszustand** | **Regelsignal UR** |
|---|---|
| Eingangsspannung zu niedrig | H |
| Ausgangsspannung zu hoch (TS-Kurzschluß) | L |
| Ausgangsspannung zu hoch | H |
| Regelschleife unterbrochen Eingangspannung zu hoch - entspricht Ausgangsspannung zu hoch (z. B. bei einem als Booster ausgebildeten Vorregler) | L |

Die in dieser Tabelle dargestellten Zustände können nun durch eine einfache Digitalschaltung (zeitabhängiges Schaltwerk), z. B in Form ein retriggerbaren Mono-Flops MF ausgewertet werden. Der Abgriff AP wird hierzu mit dem Setzeingang S des Mono-Flops MF verbunden. Der Rücksetzeingang R wird beispielsweise durch eine Einschaltflanke beim Zuschalten der Versorgungsquelle UQ aktiviert.

Figur 3 zeigt im 1. Zeitdiagramm das Regelsignal UR 1 für den Fehlerfall "dauernd auf L-Pegel". Im darunter dargestellten Diagramm liegt der 2. Fehlerfall vor: Regelsignal UR 2 "dauernd auf H-Pegel". Verweilt nun die Regelspannung UR 1 oder UR 2 länger als die von der Zeitkonstanten RT x CT des Mono-Flops MF vorgegebene Zeitspanne auf H oder auf L-Pegel, so erscheint am Ausgang des Mono-Flops MF ein Schutzsignal Q (Übergang von H auf L-Pegel) gemäß Figur 3, 4. Zeitdiagramm.
Im 3. Zeitdiagramm ist das interne Mono-Flop-Signal URC dargestellt. Über den Widerstand RT und/oder den Kondensator CT kann die Verzögerungszeit TD des Mono-Flops eingestellt werden. Das Schutzsignal Q kann nun vorzugsweise dazu verwendet werden den Schaltregler außer Betrieb zu setzen. Beispielsweise kann eine Schaltung RE in Form eines Relais vorgesehen sein, das auf das Schutzsignal Q hin anspricht und beispielsweise einen Relaiskontakt - Schalter S 1 - zwischen der Versorgungsquelle UQ und dem Schaltreglereingang öffnet. Zum Einschalten des Schaltreglers nach Beseitigung des Fehlers ist der Schalter S 1 natürlich wieder zu schließen. Nach dem Schließen liefert die zugeschaltete Versorgungsquelle UQ eine Schaltflanke TCON zum Rücksetzen des Mono-Flops MF.

Die Anordnung nach der Erfindung kann vorteilhaft in einen ASIC implementiert werden. Die Zeitverzögerung des Monoflops kann dann auf digitalem Wege im Asic z.B. durch Zählerbausteine realisiert werden.

Anstelle des Schalters S1 in der Zuleitung zwischen Versorgungsquelle UQ und Stellglied TS kann das Schutzsignal Q auch dazu verwendet werden eine Treiberstufe zur Ansteuerung des Stellgliedes zu sperren.

## Patentansprüche

1. Verfahren zum Schutz eines Schaltreglers gegen fehlerhafte Betriebszustände,dadurch gekennzeichnet, daß das Regelsignal für das Schaltregler-Stellglied (TS) daraufhin überwacht wird, ob es länger als eine vorgegebene Zeitspanne auf einem logischen Pegel (H, L) verweilt, und daß in diesem Falle ein Schutzsignal (Q) generiert wird, welches inbesondere dazu verwendbar ist, den Schaltregler außer Betrieb zu setzen.

2. Verfahren nach Anspruch 1, dadurch gekennzeichnet, daß das Regelsignal in der Schaltregler-Regelschleife an der Verbindungsleitung zwischen dem Pulsbreitenmodulator (PBM) des Schaltreglers und einem Flip-Flop FF 1 zum Ansteuern des Schaltregler-Stellgliedes (TS) abgegriffen wird.

3. Anordnung zum Schutz eines Schaltreglers gegen fehlerhafte Betriebszustände mit folgenden Merkmalen:
- einer Regelschleife zwischen seinem Ausgang und dem Schaltregler-Stellglied (TS),
- einem Abgriff (AP) in der Regelschleife zur Auswertung des Regelsignales,
- einem Schaltwerk (MF), welches nach Ablauf einer vorgegebenen Zeitspanne bei gleichem Eingangspegel an seinem Ausgang eine Pegeländerung aufweist,
- einer Schaltung (RE) zur Aufbereitung des Ausgangssignales (Q) des Schaltwerkes (MF) in ein Signal zur Außer-Betriebnahme des Schaltreglers

4. Anordnung nach Anspruch 3, dadurch gekennzeichnet, daß das Schaltwerk (MF) aus einem retriggerbaren Mono-Flop besteht.

5. Anordnung nach Anspruch 3 oder 4, dadurch gekennzeichnet, daß das Schaltwerk/Mono-Flop (MF) von einer Einschaltflanke (TCON), die insbesondere bei der Zuschaltung der Versorgungsquelle (UQ) an den Schaltregler entsteht, rücksetzbar ist.

6. Anordnung nach einem der Ansprüche 3 bis5, dadurch gekennzeichnet, daß der Abgriff (AP) in der Regelschleife zwischen dent Pulsbreitenmodulator (BM) des Schaltreglers und einem Flip-Flop (FF 1) zum Ansteuern des Schaltregler-Stellgliedes (TS) angeordnet ist.

7. Anordnung nach Anspruch 6, dadurch gekennzeichnet, daß der Trigger-Eingang des Flip-Flops (FF1) zum Ansteuern des Schaltregler-Stellgliedes (TS) sowie das den Pulsbreitenmodulator (PBM) steuernde Sägezahnsignal (SZ) von einem gemeinsamen Takt (T) gesteuert ist.

8. Verwendung des Verfahrens / der Anordnung nach einem der Ansprüche 1 bis 7 für einen Abwärtssteller.
